# EUROPÄISCHE PATENTSCHRIFT

(11) **EP 0 421 069 B1**
(45) Veröffentlichungstag und Bekanntmachung des Hinweises auf die Patenterteilung: **07.12.1994**
(21) Anmeldenummer: 90114023.6
(22) Anmeldetag: 21.07.1990
(51) Int. Cl.: B23Q 3/12

(54) **Ausrichtevorrichtung**
Locating device
Dispositif d'alignement

(30) Priorität: 30.09.1989 DE 3932826
(43) Veröffentlichungstag der Anmeldung: 10.04.1991
(73) Patentinhaber: HANDTMANN A-PUNKT AUTOMATION GMBH, D-88255 Baienfurt (DE)
(72) Erfinder: Strasser, Karl-Heinz, D-7981 Berg bei Ravensburg (DE)
(74) Vertreter: Engelhardt, Guido, Dipl.-Ing.

(56) Entgegenhaltungen:
- DE-A- 1 477 703
- DE-A- 1 602 703
- DE-A- 2 819 607
- DE-A- 3 531 160

## Beschreibung

Die Erfindung bezieht sich auf eine Vorrichtung zum Ausrichten eines Werkzeuges auf eine Aufnahmebohrung, bestehend aus einem einen zylindrischen Schaft aufweisenden Werkzeughalter und einem diesen tragenden Greifer, der aus einer Anlageplatte und zwei den Werkzeughalter seitlich teilweise umfassende Spanngliedern gebildet ist, wobei die Spannglieder gegenüber der Anlageplatte in Achsrichtung des Werkzeughalters verstellbar sind.

Das maschinelle Einführen von zylindrischen Werkstücken in Aufnahmebohrungen, in denen diese mittels Schrauben oder Federn verspannt werden, ist vielfach mit erheblichen Schwierigkeiten verbunden, da einerseits die Passungen der ineinander zuschiebenden Bauteile klein gehalten werden sollen, um eine spielfreie Verbindung zu gewährleisten, andererseits eine exakte achssenkrechte und mittige Zustellung des einzuführenden Werksstückes zu der Aufnahmebohrung meist nicht zu bewerkstelligen ist. Und fluchtet beim Einschieben das Werkstück nicht mit der Aufnahmebohrung, wird dieses verkantet. Dadurch können sowohl das Werkstück als auch die Aufnahmebohrung beschädigt werden, zumindest aber ist der Einschubvorgang zu wiederholen. Eine aufmerksame Überwachung derartiger insbesondere bei einem Werkzeugwechsel unumgänglicher und sehr häufig vorzunehmender Einschubvorgänge ist daher erforderlich, dennoch sind hierbei auftretende Betriebsstörungen nahezu unvermeidbar.

Durch die DE-A1-35 31 160 ist bereits ein Werkzeugwechsler der eingangs genannten Gattung für eine Werkzeugmaschine bekannt. Bei diesem Werkzeugwechsler wird das Werkzeug manuell in den Greifer eingelegt, so daß das Ausrichten jeweils von Hand vorgenommen wird und eine besondere Gestaltung der Anlageplatte und des Werkstückhalters nicht vorgesehen und auch nicht erforderlich sind.

Aufgabe der Erfindung ist es daher, eine Vorrichtung zum Einführen eines zylindrischen Werkstückes in eine Aufnahmebohrung der vorgenannten Art zu schaffen, mittels der es möglich ist, das Werkstück in diese einzuschieben, ohne daß eine exakte Positionierung des Werkstückes in bezug auf die Aufnahmebohrung notwendig ist und ohne daß dabei Verkantungen auftreten. Das Werkstück soll sich vielmehr selbsttätig auf die Aufnahmebohrung ausrichten können, so daß auch bei Passungen mit geringen Toleranzen der Einschubvorgang ohne großen Kraftaufwand durchzuführen ist und Beschädigungen an den zu verbindenden Teilen zuverlässig vermieden werden. Der dazu erforderliche Bauaufwand soll gering gehalten werden, dennoch soll ein störungsfreier Betrieb, insbesondere bei automatischer Zuführung von Werkstückhaltern, gewährleistet sein, ohne daß besondere Überwachungen vorzusehen sind.

Gemäß der Erfindung wird dies bei einer Vorrichtung der oben angeführten Auf dadurch erreicht, daß die Anlageplatte und der Werkzeughalter einander zugekehrte senkrecht zu der Aufnahmebohrung verlaufende Anlageflächen aufweisen und daß der Werkzeughalter mittels der Spannglieder parallel zur Anlagefläche der Anlageplatte begrenzt verschiebbar gehalten ist.

Zweckmäßig ist es hierbei, die Anlagefläche des Werkzeughalters durch einen an diesem angeformten Bund zu bilden, mittels dem dieser zwischen der Anlageplatte und den Spanngliedern des Greifers einspannbar ist, und die Spannglieder mittels radial zu dem Werkzeughalter gerichteter Zapfen an der der Anlagefläche gegenüberliegenden Stirnseite des Bundes an diesem abzustützen, wobei zur begrenzten Verschiebbarkeit des Werkzeughalters in Richtung der Anlagefläche der Anlageplatte in den Bund auf der den Zapfen zugekehrten Stirnseite achsparallel zu diesen verlaufende Freisparungen eingearbeitet sein können, in die die Zapfen eingreifen.

Die Spannnglieder des Greifers können durch zwei unabhängig voneinander verschwenkbar gelagerte Hebel gebildet werden, die um eine senkrecht zu deren Längserstreckung verlaufende durch einen in der Anlageplatte eingesetzten Bolzen gebildete Achse verschwenkbar gelagert sind. Hierbei ist es angebracht, zur Verspannung des Werkzeughalters auf der den Zapfen gegenüberliegenden Seite zwischen der Anlageplatte und den Hebeln der Spannglieder jeweils mindestens eine Druckfeder anzuordnen.

Nach einer andersartigen Ausgestaltung können die Spannglieder aber auch durch zwei seitlich neben dem Werkzeughalter einander gegenüberliegend angeordnete und verdrehbar in der Anlageplatte gelagerte Scheiben, an denen exzentrisch zu deren Rotationsachse jeweils einer der mit dem Bund des Werkzeughalters zusammenwirkende Zapfen angebracht sind, oder durch zwei seitlich neben dem Werkzeughalter einander gegenüberliegende angeordnete und in der Anlageplatte verschiebbar geführte Zugbolzen, auf die jeweils mindestens eine an der Anlageplatte abgestützte Feder einwirkt und an denen die mit dem Bund des Werkzeughalters zusammenwirkenden Zapfen angebracht sind, gebildet werden.

Vorteilhaft ist es zur Verminderung der Reibung ferner, die Anlagefläche der Anlageplatte und/oder des Werkzeughalters mit einem reibungsmindernden Belag, mit Wälzkörpern beispielsweise in Form von eingesetzten Kugeln oder dgl. zu versehen.

Wird eine Vorrichtung zum Ausrichten eines Werkzeuges auf eine Aufnahmebohrung gemäß der Erfindung ausgebildet, so ist es auf sehr einfache und betriebssichere Weise möglich, das Werkstück in die Aufnahmebohrung einzuführen, ohne daß dieses dabei verkantet wird und Beschädigungen an den miteinander zu verbindenden Bauteilen in Kauf zu nehmen sind. Wird nämlich das Werkstück mit Hilfe der Spannglieder derart in dem Greifer eingespannt, daß dieses in Richtung der Anlagefläche der Anlageplatte verschiebbar ist, so wird das Werkstück durch die an diesen und/oder der Aufnahmebohrung obligatorisch vorgesehenen Einführschrägen selbsttätig zentriert und exakt auf die Aufnahmebohrung ausgerichtet. Verkantungen und dadurch bedingte Beschä- digungen werden somit zuverlässig vermieden, auch ist das Einschieben des Werkstückes mit geringem Kraftaufwand zu bewerkstelligen.

Das Werkstück ist demnach nicht exakt auf die Aufnahmebohrung auszurichten, vielmehr ist eine Vorzentrierung ausreichend, um ein störungsfreies Einführen vornehmen zu können. Die vorschlagsgemäß ausgebildete Vorrichtung kann somit insbesondere in automatisierten Betriebsabläufen, zumal eine besondere Überwachung nicht erforderlich ist, z.B. beim Wechsel von Werkstückhaltern, in vorteilhafter Weise eingesetzt werden. Auch ist, da nur wenige Bauteile benötigt werden, um eine ausgleichende Halterung des Werkstückes zu ermöglichen, eine wirtschaftliche Fertigung der Vorrichtung gegeben.

In der Zeichnung sind drei Ausführungsbeispiele der gemäß der Erfindung ausgebildeten Vorrichtung zum Ausrichten eines Werkzeuges auf eine Aufnahmebohrung dargestellt, die nachfolgend im einzelnen erläutert sind. Hierbei zeigt:
- Figur 1: die Ausrichtvorrichtung in Seitenansicht und teilweise im Schnitt,
- Figur 2: die Vorrichtung nach Figur 1 in Ansicht,
- Figur 3: die Vorrichtung nach Figur 2 in einer Weiterbildung und
- Figuren 4 und 5: die Vorrichtung nach Figur 1 mit andersartig ausgebildeten Spanngliedern.

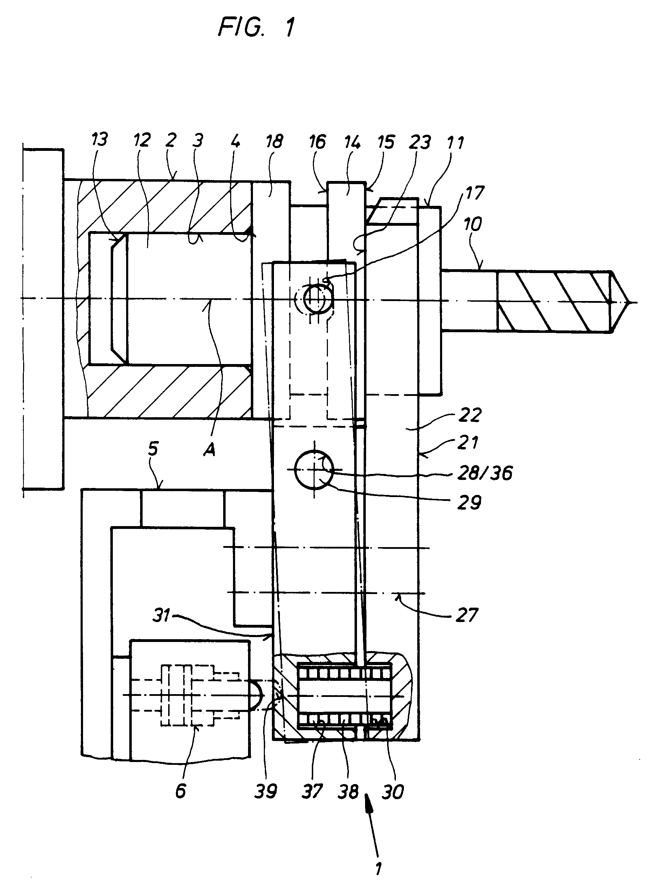

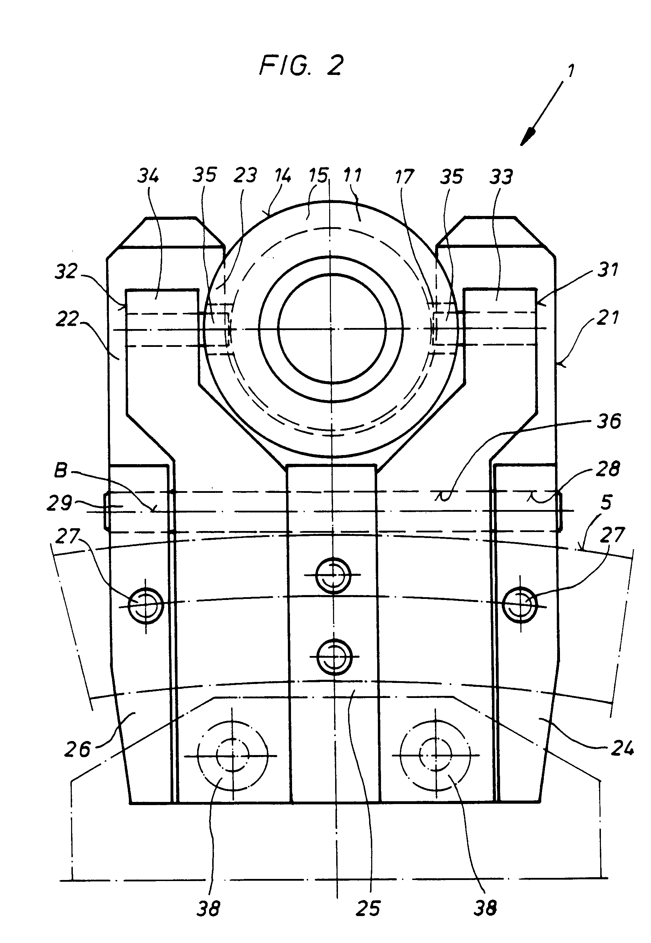

Die in den Figuren 1 bis 5 dargestellte und mit 1 bzw. 1' bzw. 1'' bezeichnete Vorrichtung dient zum Ausrichten eines Werkstückes 10, beispielsweise eines mit einem zylindrischen Schaft 12 versehenen Werkzeughalters 11 auf eine Aufnahmebohrung 3 einer Maschinenspindel 2, und besteht im wesentlichen aus einem an einer Scheibe 5 eines Revolverkopfes befestigten Greifer 21, in dem der ein Werkzeug 10 tragende Werkzeughalter 11 eingespannt ist. Der Greifer 21 ist bei dem Ausführungsbeispiel nach den Figuren 1 bis 5 jeweils aus einer Anlageplatte 22 und Spanngliedern 31, 32 bzw. 41 bzw. 51 gebildet, mittels denen der Werkzeughalter 11 einspannbar ist.

Um eine exakte Einführung des Schaftes 12 in die Aufnahmebohrung 3 bewerkstelligen zu können, ohne daß dabei der Werkzeughalter 11 verkantet und somit Beschädigungen an dem Schaft 12 und/oder der Maschinenspindel 2 auftreten, ist an dem Werkzeughalter 11 eine durch einen Bund 14 gebildete Anlagefläche 15 vorgesehen, die senkrecht zur Längsachse A des Werkzeughalters 11 verläuft, und an der Anlageplatte 22 des Greifers 21 ist ebenfalls eine Anlagefläche 23 angearbeitet, gegen die die Anlagefläche 15 des Werkzeughalters 11 gedrückt wird. Außerdem ist der Werkzeughalter 11 in Richtung der Anlagefläche 23 begrenzt verschiebbar gehalten, so daß beim Einführen des Schaftes 12 in die Aufnahmebohrung 3 durch die an diesen vorgesehenen Einführschrägen 13 bzw. 4 der Werkzeughalter 11, sofern dieser nicht exakt zentrisch zugeführt wird, selbsttätig zentriert wird. Der Werkzeughalter 11 wird dabei mehr oder weniger nach innen, außen oder zur Seite verschoben, liegt dabei aber stets plan an der Anlagefläche 23 der Anlageplatte 22 an, ein Kippen und somit ein Verkanten in der Aufnahmebohrung 3 ist dadurch ausgeschlossen.

Der Greifer 21 ist über drei an der Anlageplatte 22 angeformte Leisten 24, 25 und 26 mittels Schrauben 27 an der Scheibe 5 des Revolverkopfes befestigt und bei dem Ausführungsbeispiel nach den Figuren 1 bis 3 sind in den Leisten 24, 25 und 26 Bohrungen 28 eingearbeitet, in denen ein durchgehender Bolzen 29 eingesetzt ist. Der Bolzen 29 durchgreift in den Spanngliedern 31 und 32, die als Hebel 33 und 34 ausgebildet sind, vorgesehene Bohrungen 36 und um dessen Achse B sind die Hebel 33, 34 verschwenkbar. An den dem Werkzeughalter 11 zugekehrten Enden sind die Hebel 33 und 34 jeweils mit einem radial zu diesen gerichteten Zapfen 35 versehen, der gegen die der Anlagefläche 15 des Bundes 14 gegenüberliegende Fläche 16 gedrückt wird.

Um dies bewerkstelligen zu können, wirken auf die anderen Enden der Hebel 33 und 34 Druckfedern 38 ein, die in in die Anlageplatte 22 eingearbeitete Sacklochbohrungen 30 sowie in den Hebeln 33 und 34 vorgesehenen Sacklochbohrungen 37 eingesetzt sind. Durch die Kraft der Federn 38 werden die Hebel 33, 34 verschwenkt und der Werkzeughalter 11 wird somit fest gegen die Anlagefläche 23 der Anlageplatte 22 gedrückt, ist aber dennoch in Richtung der Anlagefläche 23 verschiebbar. Damit jedoch die achssenkrechte Verschiebbarkeit begrenzt ist, sind in die Fläche 16 des Bundes 14 zwei Freisparungen 17 eingearbeitet, in die die Zapfen 35 der Hebel 33. 34 eingreifen.

Soll der Schaft 12 des Werkzeughalters 11 in die Aufnahmebohrung 3 der Maschinenspindel 2 eingeführt werden, so wird dieser zunächst mittels des an der Scheibe 5 des Revolverkopfes befestigten Greifers 21 vor die Aufnahmebohrung 3 gebracht. Die Anlagefläche 23 verläuft dabei achssenkrecht zu dieser, so daß der Werkzeughalter 11 zumindest achsparallel zu der Bohrung 3 ausgerichtet ist. Sodann wird durch eine Axialbewegung der Schaft 12 in Richtung der Aufnahmebohrung 3 verschoben; ist dieser jedoch nicht zentrisch ausgerichtat, so wird, sobald die Einführschräge 13 des Schaftes 12 an der Einführschräge 4 der Aufnahmebohrung 3 anliegt, der Werkzeughalter 11 mehr oder weniger nach außen, innen oder zur Seite bewegt, der Schaft 12 wird dadurch fluchtend zu der Aufnahmebohrung 3 ausgerichtet und kann mit geringer Kraft und ohne daß eine Verkantung eintritt, bis zur Anlage eines weiteren an dem Werkzeughalter 11 vorgesehenen Bundes 18 an der Maschinenspindel 2 in deren Aufnahmebohrung 3 eingeführt werden. Mit Hilfe von an der Scheibe 5 angebrachten Entriegelungseinrichtungen 6, deren Betätigungsglieder in an den Hebeln 33, 34 vorgesehene Ausnehmungen 39 eingreifen und diese gemäß der strickpunktierten Darstellung in Figur 1 verschwenken können und damit der Spannkraft der Federn 38 entgegenwirken, kann daraufhin der Greifer 21 von dem in der Maschinenspindel eingesetzten Werkzeughalter 11 gelöst werden.

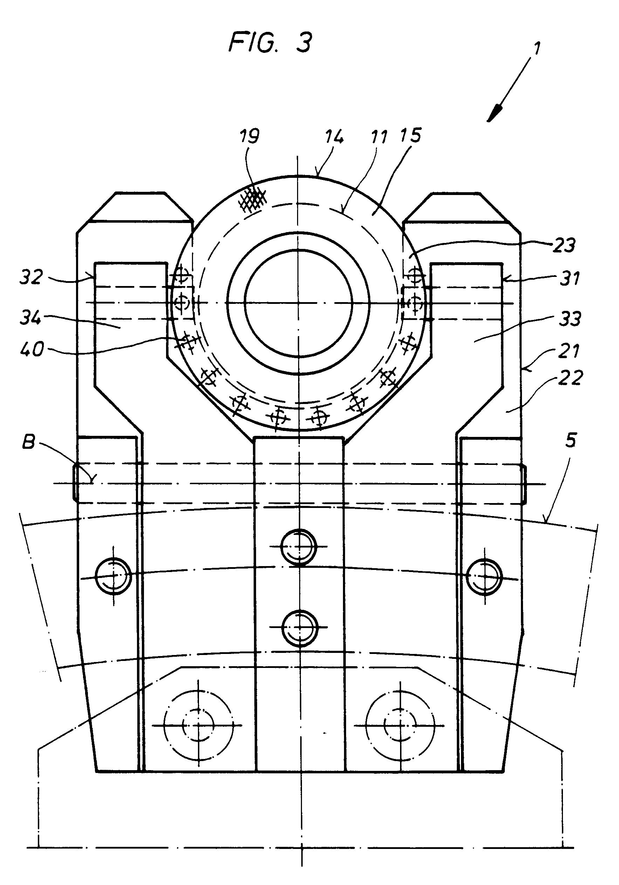

Zur Verminderung der Reibung beim Ausrichten des Werkzeughalters 11 können, wie dies in Figur 3 dargestellt ist, die Anlagefläche 15 des Bundes 14 und/oder die Anlagefläche 23 der Anlageplatte 22 mit einem reibungsmindernden Belag 19 versehen sein, es können aber auch in diese Wälzkörper, beispielsweise Kugeln 40, eingesetzt werden.

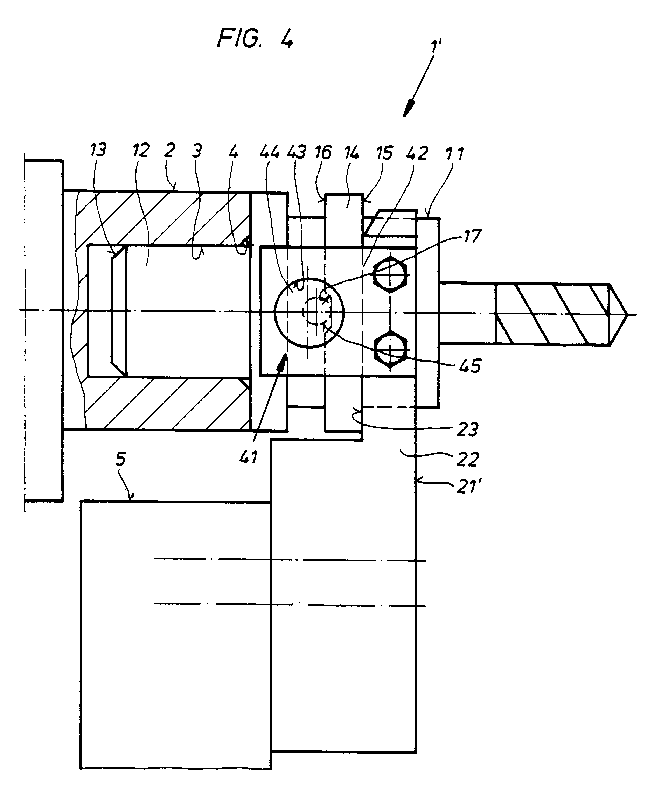

Bei dem Greifer 21' nach Figur 4 sind als Spannglieder 41 verdrehbar zwei gelagerte Scheiben 44 vorgesehen, an denen jeweils ein exzentrisch zu deren Rotationsachse angeordneter Zapfen 45 angebracht ist, die in die Ausnehmungen 17 des Bundes 14 des Werkzeughalters 11 eingreifen. Die Scheiben 44 sind hierbei in Bohrungen 43 drehbar gelagert, die in seitlich an der Aufnahmeplatte 22 befestigte Platten 42 eingearbeitet sind. Durch Verdrehen der Scheiben 44 von Hand oder maschinell wird somit der Werkzeughalter 11 an die Anlagefläche 23 der Anlageplatte 22 gepreßt - dieser ist aber dennoch in Richtung der Anlagefläche 23 begrenzt verschiebbar - bzw. die Verbindung zwischen dem Werkzeughalter 11 und dem Greifer 21' wird gelöst.

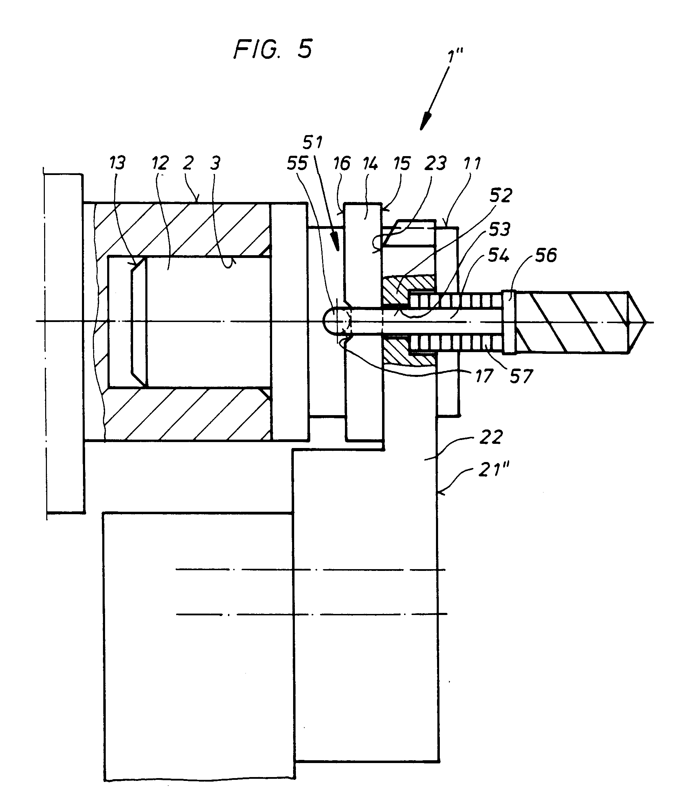

Gemäß Figur 5 sind die bei dem Greifer 21'' vorgesehenen auf den Werkzeughalter 11 einwirkenden Spannglieder 51 durch zwei Zugbolzen 54 gebildet, die in ihrer Längsrichtung verschiebbar in in seitliche Ansätze 52 der Anlageplatte 22 eingearbeitete Bohrungen 53 gehalten sind. An der der Fläche 16 zugekehrten Enden der Stehbolzen 54 sind wiederum radialgerichtete Stifte 55 an diesen angebracht, die in die Ausnehmungen 17 der Fläche 16 eingreifen, an dem anderen Ende der Stehbolzen 54 sind diese mit einem Bund 56 versehen, auf die jeweils eine an der Anlageplatte 22 abgestützte Feder 57 einwirkt. Durch die Kraft der Federn 57 ist somit der Werkzeughalter 11 plan an der Anlagefläche 23 der Anlageplatte 22 anliegend, aber dennoch begrenzt auf dieser verschiebbar in dem Greifer 21'' eingespannt.

## Patentansprüche

1. Vorrichtung (1) zum Ausrichten eines Werkzeuges (10) auf eine Aufnahmebohrung (3), bestehend aus einem einen zylindrischen Schaft (12) aufweisenden Werkzeughalter (11) und einem diesen tragenden Greifer (21, 21', 21''), der aus einer Anlageplatte (22) und zwei den Werkzeughalter (11) seitlich teilweise umfassenden Spanngliedern (31, 32; 41; 51) gebildet ist, wobei die Spannglieder (31, 32; 41; 51) gegenüber der Anlageplatte (22) in Achsrichtung (A) des Werkzeughalters (11) verstellbar sind,
**dadurch gekennzeichnet,**
daß die Anlageplatte (22) und der Werkzeughalter (11) einander zugekehrte senkrecht zu der Aufnahmebohrung (3) verlaufende Anlageflächen (15; 23) aufweisen und daß der Werkzeughalter (11) mittels der Spannglieder (31, 32; 41; 51) parallel zur Anlagefläche (23) der Anlageplatte (22) begrenzt verschiebbar gehalten ist.

2. Vorrichtung nach Anspruch 1,
**dadurch gekennzeichnet,**
daß die Anlagefläche (15) des Werkzeughalters (11) durch einen an diesem angeformten Bund (14) gebildet ist, mittels dem der Werkzeughalter (11) zwischen der Anlageplatte (22) und den Spanngliedern (31, 32; 41; 51) des Greifers (21; 21'; 21'') einspannbar ist.

3. Vorrichtung nach Anspruch 1 oder 2,
**dadurch gekennzeichnet,**
daß die Spannglieder (31, 32; 41; 51) mittels radial zu dem Werkzeughalter (11) gerichteter Zapfen (35; 45; 55) an der der Anlagefläche (15) gegenüberliegenden Fläche (16) des Bundes (15) an diesem abgestützt sind.

4. Vorrichtung nach Anspruch 3,
**dadurch gekennzeichnet,**
daß zur begrenzten Verschiebbarkeit des Werkzeughalters (11) in Richtung der Anlagefläche (23) der Anlageplatte (22) in den Bund (14) auf der den Zapfen (35; 45; 55) zugekehrten Fläche (16) achsparallel zu diesen verlaufende Freisparungen (17) eingearbeitet sind, in die die Zapfen (35; 45; 55) eingreifen.

5. Vorrichtung nach einem oder mehreren der Ansprüche 1 bis 4,
**dadurch gekennzeichnet,**
daß die Spannglieder (31, 32) des Greifers (21) durch zwei unabhängig voneinander verschwenkbar gelagerte Hebel (33, 34) gebildet sind, die um eine senkrecht zu deren Längserstreckung verlaufende durch einen in der Anlageplatte (22) eingesetzten Bolzen (29) gebildete Achse (B) verschwenkbar gelagert sind.

6. Vorrichtung nach Anspruch 5,
**dadurch gekennzeichnet,**
daß zur Verspannung des Werkzeughalters (11) auf den Zapfen (35) gegenüberliegenden Seite zwischen der Anlageplatte (22) und den Hebeln (33, 34) der Spannglieder (31, 32) jeweils mindestens eine Druckfeder (37) angeordnet ist.

7. Vorrichtung nach einem oder mehreren der Ansprüche 1 bis 4,
**dadurch gekennzeichnet,**
daß die Spannglieder (41) durch zwei seitlich neben dem Werkzeughalter (11) einander gegenüberliegend angeordnete und verdrehbar in der Anlageplatte (22) gelagerte Scheiben (44) gebildet sind, an denen exzentrisch zu deren Rotationsachse jeweils einer der mit dem Bund (14) des Werkzeughalters (11) zusammenwirkenden Zapfen (45) angebracht ist.

8. Vorrichtung nach einem oder mehreren der Ansprüche 1 bis 4,
**dadurch gekennzeichnet,**
daß die Spannglieder (51) durch zwei seitlich neben dem Werkzeughalter (11) einander gegenüberliegende angeordnete und in der Anlageplatte (22) verschiebbar geführte Zugbolzen (54) gebildet sind, auf die jeweils mindestens eine an der Anlageplatte (22) abgestützte Feder (57) einwirkt und an denen die mit dem Bund (14) des Werkzeughalters (11) zusammenwirkenden Zapfen (55) angebracht sind.

9. Vorrichtung nach einem oder mehreren der Ansprüche 1 bis 8,
**dadurch gekennzeichnet,**
daß die Anlagefläche (23 bzw. 15 ) der Anlageplatte (22) und/oder des Werkzeughalters (11) mit einem reibungsmindernden Belag (19), mit Wälzkörpern beispielsweise in Form von eingesetzten Kugeln (40) oder dgl. versehen sind.

## Claims

1. A device (1) for locating a tool (10) on a support bore (3), consisting of a tool holder (11) with a cylindrical shaft (12) and a grip (21, 21', 21'') which holds the tool holder (11), whereby the grip (21, 21', 21'') is made up of a contact plate (22) and two clamping elements (31, 32; 41; 51) which partially surround the sides of the tool holder (11), and whereby the clamping elements (31, 32; 41; 51) can by moved in relation to the contact plate (22) in the axial direction (A) of the tool holder (11),
**characterized in that**,
the clamping plate (22) and the tool holder (11) have contact surfaces (15; 23) which are located facing each other and are vertical to the support bore (3), and that the tool holder (11) is held in parallel to the contact surface (23) of the contact plate (22) by the clamping elements (31, 32; 41; 51) and is afforded a limited degree of movement.

2. Device in accordance with Claim 1,
**characterized in that,**
the contact surface (15) of the tool holder (11) is produced by a collar (14) formed onto the latter, by means of which collar (14) it is possible to clamp the tool holder (11) between the contact plate (22) and the clamping elements (31, 32; 41; 51) of the grip (21; 21'; 22'').

3. Device in accordance with Claim 1 or Claim 2,
**characterized in that,**
the clamping elements (31, 32; 41; 51) are supported against the collar (14) by means of lugs (35; 45; 55) located radially to the tool holder (11) on the surface (16) of the collar (14) which faces the contact surface (15).

4. Device in accordance with Claim 3,
**characterized in that,**
in order to provide a limited amount of movement for the tool holder (11) in the direction of the contact surface (23) of the contact plate (22), notches (17) are worked into the collar (14) on the surface (16) which faces the lugs (35; 45; 55), whereby the notches (17) are located axially in parallel to the lugs (35; 45; 55) and the latter engage in the former.

5. Device in accordance with one or more of Claims 1 to 4,
**characterized in that,**
the clamping elements (31, 32) of the grip (21) are formed by two levers (33, 34) which are mounted so as to be swivelled independently of each other, and which are in addition mounted so as to as to swivel on an axis (B) which runs vertically to the longitudinal extension of the levers (33, 34) and is produced by a pin (29) inserted in the contact plate (22).

6. Device in accordance with Claim 5,
**characterized in that,**
at least one pressure spring (37) is fitted on each clamping element (31, 32) in order to clamp the tool holder (11) on the side facing the lugs (35) between the contact plate (22) and the levers (33, 34) of the clamping elements (31, 32).

7. Device in accordance with one or more of Claims 1 to 4,
**characterized in that,**
the clamping elements (41) are produced by two discs (44) which are located opposite each other on either side of the tool holder (11) and are mounted in the contact plate (22) so as to permit them to rotate whereby the discs (44) have one lug (45) each located eccentrically to their axis of rotation, which engage with the collar (14) of the tool holder (11).

8. Device in accordance with one or more of Claims 1 to 4,
**characterized in that,**
the clamping elements (51) are produced by two set bolts (54) which are located opposite each other on either side of the tool holder (11) and are mounted in the contact plate (22) so as to permit them to rotate whereby at least one spring (57) which is supported against the contact plate (22) acts upon each set bolt (54), and whereby the set bolts (54) have lugs (55) which engage with the collar (14) of the tool holder (11).

9. Device in accordance with one or more of Claims 1 to 8,
**characterized in that,**
the contact surfaces (23 or 15) of the contact plate (22) and/or of the tool holder (11) are provided with an anti-friction lining (19), with anti-friction bearings, for example in the form of inserted balls (40), or a similar device.

## Revendications

1. Dispositif (1) d'alignement d'un outil (10) sur un alésage de centrage (3) comprenant un porte-outil (11) avec une tige cylindrique (12) et une griffe (21, 21', 21'') qui le supporte, formée par une plaque de butée (22) et deux éléments de serrage (31, 32; 41; 51) entourant le porte-outil (11) partiellement sur les côtés, les éléments de serrage (31, 32; 41; 51) se laissant déplacer en direction axiale (A) du porte-outil (11) par rapport à la plaque de butée (22),
caractérisé en ce que
la plaque de butée (22) et le porte-outil (11) soient équipés de faces de portée (15; 23) s'opposant et disposées perpendiculairement par rapport à l'alésage de centrage (3) et qu'à l'aide des éléments de serrage (31, 32; 41; 51), le porte-outil (11) se laisse déplacer dans une certaine limite, parallèlement à la face de portée (23) de la plaque de butée (22).

2. Dispositif d'après la revendication 1,
caractérisé en ce que
la face de portée (15) du porte-outil (11) soit constituée par un collet (14) qui y est formé et qui permet de serrer le porte-outil (11) entre la plaque de butée (22) et les éléments de serrage (31, 32; 41; 51) de la griffe (21, 21', 21'').

3. Dispositif d'après la revendication 1 ou 2,
caractérisé en ce que
au moyen de tétons (35; 45; 55) dirigés radialement vers le porte-outil (11), les éléments de serrage (31, 32; 41; 51) s'appuient sur la face (16) du collet (14) qui est opposée à la face de portée (15).

4. Dispositif d'après la revendication 3,
caractérisé en ce que
pour le déplacement limité du porte-outil (11) en direction de la face de portée (23) de la plaque de butée (22), il soit pratiqué dans le collet (14), sur la face (16) opposée aux tétons (35; 45; 55), des évidements (17) dirigés parallèlement à leur axe, dans lesquels s'engrènent les tétons (35; 45; 55).

5. Dispositif d'après une ou plusieurs des revendications 1 à 4,
caractérisé en ce que
les éléments de serrage (31, 32) de la griffe (21) soient formés par deux leviers (33, 34) pivotant indépendamment l'un de l'autre autour d'un axe (B) perpendiculaire à leur direction longitudinale, formé par un boulon (29) inséré dans la plaque de butée (22).

6. Dispositif d'après la revendication 5,
caractérisé en ce que
pour le serrage du porte-outil (11), il soit prévu sur la face opposée aux tétons (35), entre la plaque de butée (22) et les leviers (33, 34) des éléments de serrage (31, 32) respectivement au moins un ressort de pression (37).

7. Dispositif d'après une ou plusieurs des revendications 1 à 4,
caractérisé en ce que
les éléments de serrage (41) soient formés par deux disques (44) s'opposant sur les côtés du porte-outil (11), tournant dans la plaque de butée (44), et sur lesquels sont prévus en position excentrique par rapport à leur axe de rotation, respectivement un des tétons (45) collaborant avec le collet (14) du porte-outil (11).

8. Dispositif d'après une ou plusieurs des revendications 1 à 4,
caractérisé en ce que
les éléments de serrage (51) soient formés par deux boulons de traction (54) s'opposant sur les côtés du porte-outil (11) et déplaçables dans la plaque de butée (22), sur lesquels agit respectivement au moins un ressort (57) appuyé sur la plaque de butée (22) et sur lesquels sont prévus les tétons (55) collaborant avec le collet (14) du porte-outil (11).

9. Dispositif d'après une ou plusieurs des revendications 1 à 8,
caractérisé en ce que
la face de portée (23 ou 15) de la plaque de butée (22) et/ou du porte-outil (11) soit munie d'un revêtement anti-friction (19), avec corps de roulement par exemple sous la forme de billes insérées (40) ou d'objets semblables.
